# EUROPÄISCHE PATENTANMELDUNG

(11) **EP 1 395 074 A1**
(43) Veröffentlichungstag der Anmeldung: **03.03.2004**
(21) Anmeldenummer: 02019449.4
(22) Anmeldetag: 30.08.2002
(51) Int. Cl.: H04Q 7/34, H04L 12/28

(54) **Verfahren zum Betrieb eines Endgerätes in einem Funkkommunikationssystem, Funkkommunikationssystem, Endgerät und Bestätigungseinheit für ein Funkkommunikationssystem**

(71) Anmelder: SIEMENS AKTIENGESELLSCHAFT, 80333 München (DE)
(72) Erfinder: Dillinger, Markus, 81737 München (DE); Falk, Rainer, Dr., 85716 Unterschleissheim (DE); Luo, Jijun, 81677 München (DE); Bushra Mohyeldin, Eiman, 81476 München (DE)

(57) **Zusammenfassung**

Verfahren zum Betrieb eines Endgerätes in einem Funkkommunikationssystem, Funkkommunikationssystem, Endgerät und Bestätigungseinheit für ein Funkkommunikationssystem

Das Verfahren zum Betrieb eines Endgeräts MS in einem Funkkommunikationssystem WLAN sieht vor, dass das Endgerät nur dann für den Betrieb im Kommunikationssystem zugelassen wird, wenn eine Bestätigung vorliegt, dass das Endgerät während seines Betriebs auf korrekte Funktionsweise überprüft werden wird. Hierdurch wird erreicht, dass Betriebsstörungen des Endgerätes in jedem Fall erkannt werden, so dass durch solche das Kommunikationssystem nicht in negativer Weise beeinflusst wird.

## Beschreibung

Die Erfindung betrifft ein Verfahren zum Betrieb eines Endgerätes in einem Funkkommunikationssystem, ein Funkkommunikationssystem, ein Endgerät und eine Bestätigungseinheit für ein Funkkommunikationssystem.

In Funkkommunikationssystemen erfolgt eine Datenübertragung von Funkstationen über eine Luftschnittstelle. Bekannte Funkkommunikationssysteme sind beispielsweise drahtlose lokale Netzwerke (WLAN, Wireless Local Area Network) sowie Mobilfunksysteme, für die zahlreiche Standards bekannt sind. In Europa sind vor allen Dingen GSM als Standard der zweiten Mobilfunkgeneration und UMTS als Standard der dritten Mobilfunkgeneration bekannt. Insbesondere in Mobilfunksystemen ist das Konzept sogenannter rekonfigurierbarer Endgeräte bekannt. Diese werden durch über ihre Luftschnittstelle durchgeführte Software-Downloads rekonfiguriert. Hierdurch kann eine Aktualisierung ihres Betriebssystems erfolgen, wodurch beispielsweise sogar ein Einsatz in Mobilfunksystemen möglich wird, zu dem das Endgerät vor der Umkonfigurierung nicht in der Lage war. Da es bei der genannten Umkonfigurierung der Endgräte zu Fehlern kommen kann, die sich in der Weise auf den Betrieb des Endgerätes auswirken, dass hierdurch der gesamte Betrieb des Funkkommunikationssystems in Mitleidenschaft gezogen wird (beispielsweise in dem von einem fehlerhaft umkonfigurierten Endgerät Signale in normalerweise nicht zulässigen Leistungsbereichen oder mit normalerweise nicht zulässigen Formaten ausgesendet werden), ist es bekannt, während des Betriebs solcher Endgeräte eine Überprüfung der von ihnen ausgesendeten Signale vorzunehmen. Auf diese Weise kann erkannt werden, ob die Signale einem normalen Betrieb entsprechen. Sollte dies nicht der Fall sein, kann aufgrund der erkannten Fehler das Endgerät als defekt erkannt und aus dem Funksystem entfernt werden.

Das soeben beschriebene Vorgehen hat zur Folge, dass negative Einflüsse eines fehlerhaft konfigurierten Endgerätes auf das Kommunikationssystem, in dem es betrieben wird, nur dann vermieden werden, wenn die während seines Betriebs durchgeführte Überprüfung seiner Signale bzw. seiner Funktionsweise zu einem entsprechend negativen Ergebnis geführt hat.

Der Erfindung liegt die Aufgabe zugrunde, die Wahrscheinlichkeit der Beeinflussung eines Funkkommunikationssystems durch fehlerhaft funktionierende Endgeräten zu reduzieren.

Diese Aufgabe wird mit einem Verfahren gemäß Anspruch 1, einem Funkkommunikationssystem gemäß Anspruch 11, einem Endgerät gemäß Anspruch 12 sowie einer Bestätigungseinheit für ein Funkkommunikationssystem gemäß Anspruch 13 gelöst. Vorteilhafte Aus- und Weiterbildungen der Erfindung sind Gegenstand abhängiger Ansprüche.

Das erfindungsgemäße Verfahren zum Betrieb eines Endgerätes in einem Funkkommunikationssystem sieht vor, dass das Endgerät nur dann für den Betrieb im Funkkommunikationssystem zugelassen wird, wenn eine Bestätigung vorliegt, dass das Endgerät während seines Betriebes auf korrekte Funktionsweise überprüft werden wird. Dies ermöglicht bereits vor der Durchführung der eigentlichen Überprüfung der Funktionsweise des Endgerätes eine Deaktivierung des Endgerätes. Sollte eine nachfolgende Überprüfung der Funktionsweise nämlich nicht gewährleistet werden können, kann nicht entschieden werden, ob das Endgerät korrekt funktioniert oder nicht. Da unerkannte Defekte des Endgerätes äußerst nachteilige Auswirkungen auf das Funkkommunikationssystem haben können, wird sein Betrieb bereits unterbunden, sofern feststeht, dass die vorgesehene Überprüfung nicht ordnungsgemäß durchgeführt werden kann.

Vorteilhafterweise wird das erfindungsgemäße Verfahren unmittelbar bei oder kurz nach der Inbetriebnahme des Endgerätes im Kommunikationssystem durchgeführt. Hierdurch wird so früh wie möglich ein negativer Einfluss im Falle eines Defekts des Endgerätes auf das Funkkommunikationssystem unterbunden. Es ist jedoch alternativ auch möglich, das erfindungsgemäße Verfahren erstmalig während eines bereits laufenden Betriebs des Endgerätes durchzuführen oder das Verfahren auch wiederholt, beispielsweise periodisch, durchzuführen. In jedem Fall hat das erfindungsgemäße Verfahren den Vorteil, dass negative Einflüsse eines defekten Endgerätes auf die Kommunikation in einem Funkkommunikationssystem nicht erst dann unterbunden werden, wenn eine entsprechende Überprüfung der Funktionsweise des Endgerätes durchgeführt worden ist. Vielmehr kann dies bereits geschehen, sobald feststeht, dass die angestrebte Überprüfung der Funktionsweise nicht gewährleistet werden kann. Dies kann beispielsweise der Fall sein, wenn eine Funktionsstörung des Kommunikationssystems oder der für die Überprüfung vorgesehenen Einheiten eine ordnungsgemäße Überprüfung unmöglich macht. Dies kann aber beispielsweise auch der Fall sein, wenn zum aktuellen Zeitpunkt keine ausreichenden Ressourcen zur Durchführung der Überprüfung zur Verfügung stehen.

Nach einer Weiterbildung der Erfindung ist ein Bestätigungssignal vorgesehen, dass im Falle seiner Übermittlung an das Endgerät angibt, dass das Endgerät während seines Betriebes überprüft werden wird. Das Endgerät wird bei dieser Weiterbildung für den Betrieb im Kommunikationssystem zugelassen, indem das Bestätigungssignal an das Endgerät übermittelt wird. Auf diese Weise kann vorteilhaft erreicht werden, dass bei Ausbleiben des Bestätigungssignals automatisch der Betrieb des Endgerätes unterbunden wird.

Nach einer Weiterbildung der Erfindung übermittelt das Endgerät vor seiner Zulassung zum Betrieb im Kommunikationssystem ein Anforderungssignal an eine Bestätigungseinheit, woraufhin die Bestätigungseinheit die Prüfung des Endgerätes veranlasst und das Bestätigungssignal an das Endgerät übermittelt. Über das Anforderungssignal erfährt das Funkkommunikationssystem von der Existenz des Endgerätes und kann die für die Überprüfung der Funktionsweise des Endgerätes notwendigen Ressourcen zur Verfügung stellen, was durch das von der Bestätigungseinheit ausgesendete Bestätigungssignal signalisiert wird.

Vorteilhafterweise verwendet das Endgerät für die Übermittlung des Anforderungssignals an die Bestätigungseinheit eine zuvor im Endgerät gespeicherte Adresse, die für die Verwendung durch eine Vielzahl von Endgeräten zumindest in diesem Kommunikationssystem vorgegeben ist. Dies ermöglicht, dass das Anforderungssignal des Endgerätes tatsächlich auch die Bestätigungseinheit erreicht. Dabei kann die hierzu verwendete Adresse der Bestätigungseinheit entweder bereits bei der Herstellung des Endgerätes oder aber auch bei einer nachfolgenden Konfigurierung des Endgerätes durch Software-Download im Endgerät gespeichert worden sein. Es ist jedoch auch möglich, das die Adresse durch ein Rundsendesignal (Broadcast) des jeweiligen Funkkommunikationssystems dem Endgerät mitgeteilt worden ist. In den beiden zuerst genannten Fällen ist es insbesondere vorteilhaft, wenn die Adresse der Bestätigungseinheit für die Verwendung in mehr als einem Funkkommunikationssystem zutreffend ist. Ist das Endgerät dann in der Lage, in diesen mehreren Kommunikationssystemen eine Kommunikation aufzunehmen, kann es bereits bei seiner Inbetriebnahme durch Aussenden jeweils derselben Adresse ohne zusätzliche Kenntnisse über Einzelheiten des jeweiligen Kommunikationssystems über sein Anforderungssignal eine Zulassung für seinen Betrieb im Kommunikationssystem anfordern.

Nach einer vorteilhaften Weiterbildung der Erfindung sendet das Endgerät das Anforderungssignal erst dann aus, nachdem nach einer von ihm durchgeführten Anmeldung beim Kommunikationsnetz eine vorgegebene Zeitspanne verstrichen ist, in der es das Bestätigungssignal nicht bereits automatisch erhalten hat. Dabei ist unter Anmeldung ein Vorgang zu verstehen, bei dem das Endgerät dem Kommunikationssystem Kenntnis von seiner Existenz verschafft. Das Kommunikationssystem ist dann in der Lage, selbsttätig die nachfolgend durchzuführende Überprüfung der Funktionsweise des Endgerätes diesem zu bestätigen, ohne dass zuvor das Anforderungssignal übertragen werden müsste. Ein solches Vorgehen ist insbesondere in Funkkommunikationssystemen möglich, die durch einen Systembetreiber (Operator) betrieben werden, der für die notwendige Überprüfung zuständig ist. Derartige Systembetreiber gibt es in den herkömmlichen Mobilfunksystemen wie beispielsweise GSM und beim geplanten UMTS. Keine Systembetreiber gibt es jedoch bei den dezentral organisierten Funkkommunikationssystemen wie beispielsweise WLAN oder sogenannten selbst organisierenden Systemen bzw. Ad-hoc-Systemen wie beispielsweise bluetooth. Befindet sich das Endgerät in einem der letztgenannten Systeme, wird es mangels einer zentralen Instanz, die die notwendige Überprüfung einleiten könnte, kein automatisches Bestätigungssignal erhalten können. Nach Ablauf der genannten Zeitspanne ist nicht mehr mit dem Eintreffen eines solchen Bestätigungssignals zu rechnen (das Endgerät kann dann darauf schließen, dass es sich in einem Kommunikationssystem ohne Systembetreiber befindet), so dass dann das Endgerät sein Anforderungssignal aussendet. Dieses kann durch die Verwendung der zutreffenden Adresse der Bestätigungseinheit günstigerweise auch in einem dezentral organisiertem Netz zielgerichtet einem entsprechenden Dienstanbieter zugeleitet werden, der die angestrebte Überprüfung veranlasst und das Bestätigungssignal an das Endgerät übermittelt.

Nach einer Weiterbildung der Erfindung sind mehrere Einrichtungen in der Lage, die Überprüfung des Endgerätes auf korrekte Funktionsweise während seines Betriebs durchzuführen. Vorteilhafterweise wird vor der Durchführung der Überprüfung bestimmt, welche dieser Einrichtungen die Überprüfung des Endgeräts durchführt. Es ist dann möglich, flexibel die Ressourcen der vorhandenen Einrichtungen, die für die Überprüfung grundsätzlich in Frage kommen, auch im Falle einer Vielzahl von Endgeräten, für die die beschriebene Überprüfung durchgeführt werden soll, den Endgeräten zuzuordnen.

Vorteilhafterweise erfolgt die Bestimmung der Einrichtung zur Durchführung der Überprüfung in der Weise, dass sich die Einrichtung möglichst in der Nähe des Endgeräts befindet. Hierdurch wird erreicht, dass während der Überprüfung zu übertragende Signale zwischen dem Endgerät und der Einrichtung zur Durchführung der Überprüfung nur relativ kurze Strecken zu bewältigen haben, so dass insgesamt durch diese zusätzlichen Signale die Kapazitäten des Kommunikationssystems möglichst wenig belastet werden.

Alternativ kann als Einrichtung zur Durchführung der Überprüfung das Endgerät selbst bestimmt werden, wobei dem Endgerät über eine Luftschnittstelle Software zugeführt wird, die für die Durchführung der Überprüfung erforderlich ist. Bei dieser Ausführungsform der Erfindung werden die vom Endgerät erzeugten Signale bereits vor ihrer Aussendung über die Luftschnittstelle vom Endgerät selbst überprüft. Durch ein Software-Download über die Luftschnittstelle lässt sich das Programm für die Durchführung der Überprüfung ständig aktualisieren und kann dem jeweiligen Kommunikationssystem, in dem sich das Endgerät gerade befindet, angepasst werden. Das genannte Programm kann sogar in Abhängigkeit eines aktuellen Aufenthaltsorts des Endgerätes im Kommunikationssystem gewählt werden.

Nach einer Weiterbildung der Erfindung werden während der Prüfung des Endgerätes von diesem zu übertragende Signale auf die Einhaltung zumindest eines bestimmten Qualitätskriteriums überprüft, dessen Wert davon abhängig ist, wo sich das Endgerät innerhalb des Funkkommunikationssystems befindet. Als Qualitätskriterium kommen beispielsweise bestimmte maximal zulässige Verzögerungszeiten oder maximal zulässige Sendeleistungswerte in Betracht. Durch die genannte ortsabhängig unterschiedliche Durchführung der Überprüfung des Endgerätes kann vorteilhaft berücksichtigt werden, dass die Einhaltung von Qualitätskriterien in ein- und demselben Kommunikationssystem durchaus in unterschiedlich starkem Maße erforderlich sein kann. Beispielsweise ist in Gegenden eines Kommunikationssystems, in denen üblicherweise eine hohe Verkehrsdichte herrscht, die Anforderungen an die einzuhaltende Signalqualität bzw. an die Fehlerfreiheit des jeweiligen Endgerätes höher, als in Gegenden, wo üblicherweise eine geringe Verkehrsdichte herrscht. Im erstgenannten Fall ist der Einfluss starker Störsignale durch ein möglicherweise defektes Endgerät schwerwiegender als im letztgenannten Fall.

Nach einer weiteren Weiterbildung der Erfindung wird nach der Zulassung des Endgerätes zum Betrieb der weitere Betrieb des Endgerätes im Kommunikationssystem nur dann nachträglich verweigert, wenn die Prüfung des Endgerätes während seines Betriebes auf korrekte Funktionsweise eine bestimmte Anzahl von Fehlern oder einen Fehler, der einen bestimmten Schwellwert überschreitet, ergeben hat. Dieses Vorgehen gestattet es, im Falle von zwar erkannten, jedoch für den Betrieb des gesamten Kommunikationssystems noch tolerierbaren Fehlern den weiteren Betrieb des Endgerätes zuzulassen. Erst wenn die Anzahl der Fehler bzw. die Schwere des Fehlers für den Betrieb des Kommunikationssystems nicht mehr tolerabel ist, wird das Endgerät vom weiteren Betrieb ausgeschlossen.

Das erfindungsgemäße Funkkommunikationssystem, das Endgerät für eine Funkkommunikationssystem sowie die Bestätigungseinheit für ein Funkkommunikationssystem gemäß den nebengeordneten Ansprüchen weisen die für das erläuterte Verfahren notwendigen Komponenten auf und sind für die Durchführung des Verfahrens in entsprechender Weise ausgebildet.

Die Erfindung wird im Folgenden anhand von in den Figuren dargestellten Ausführungsbeispielen näher erläutert. Es zeigen:
- Figur 1: einen Ausschnitt aus einem erfindungsgemäßen Funkkommunikationssystems,
- Figur 2: den Ablauf des erfindungsgemäßen Verfahrens für das Funkkommunikationssystem aus Figur 1 in einer schematischen Darstellung,
- Figur 3: ein Ablaufdiagramm für die Durchführung einer Überprüfung eines Endgerätes innerhalb des Kommunikationssystems aus Figur 1, und
- Figur 4: das Endgerät aus dem Funkkommunikationssystem aus Figur 1.

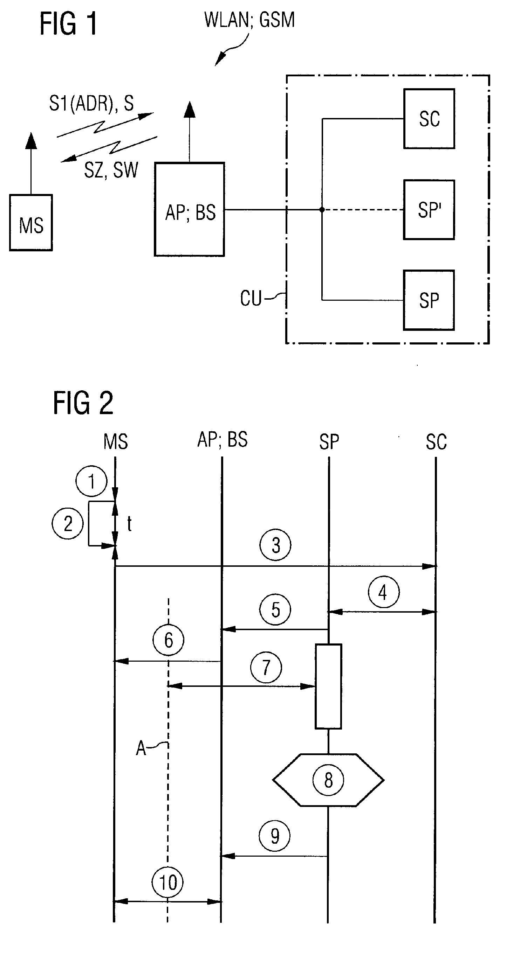

Figur 1 zeigt den Ausschnitt eines Funkkommunikationssystems WLAN; GSM. In diesem Funkkommunikationssystem befindet sich ein Endgerät MS in Form einer mobilen Teilnehmerstation, die über eine Luftschnittstelle durch Übermittlung von entsprechender Software so konfigurierbar ist, dass sie in Kommunikationssystemen unterschiedlicher Standards betrieben werden kann. Das Kommunikationssystem kann entweder ein zentral organisiertes sein, für das ein Systembetreiber (Operator) vorhanden ist, wie dies beispielsweise beim GSM-System der Fall ist. Das Kommunikationssystem WLAN kann aber auch ein dezentral organisiertes sein, für das kein System- bzw. Netzbetreiber vorhanden ist, wie dies beispielsweise bei Ad-hoc-Netzen der Fall ist. Das hier betrachtete Endgerät MS kann in beiden Arten von Funksystemen betrieben werden.

Das Kommunikationssystem WLAN; GSM weist eine Netzzugangsstation AP; BS auf, die im Falle des Ad-hoc-Netzes WLAN üblicherweise als Access Point AP und im Falle eines GSM-Netzes als Basisstation BS bezeichnet wird. Die Netzzugangsstation AP; BS ist mit einer Bestätigungseinheit CU verbunden, deren Funktion im Folgenden noch näher erläutert wird. Die Bestätigungseinheit CU weist mehrere örtlich voneinander getrennte Komponenten SC, SP, SP' auf. Eine dieser Komponenten ist ein Überprüfungszentrum SC. Weiterhin weist die Bestätigungseinheit CU zwei Überprüfungseinrichtungen SP, SP' auf. Das Überprüfungszentrum dient dazu, eine der Überprüfungseinrichtungen für die Durchführung einer Überprüfung des Endgerätes auf korrekte Funktionsweise auszuwählen. Die Überprüfungseinrichtungen SP, SP' dienen dazu, eine entsprechende Überprüfung des Endgerätes MS durchzuführen, sofern sie zuvor vom Überprüfungszentrum SC dazu bestimmt worden sind. Die Einheiten SC, SP, SP' innerhalb der Bestätigungseinheit CU können von einem oder mehreren jeweils unterschiedlichen Dienstanbietern zur Verfügung gestellt werden. Ist das Funkkommunikationssystem aus Figur 1 ein GSM-Netz, sind die Komponenten SC, SP, SP' der Bestätigungseinheit CU vorzugsweise Komponenten des Funkkommunikationssystems. Ist das Kommunikationssystem ein Ad-hoc-Netzwerk oder ein anderes System ohne Systembetreiber, ist zumindest das Überwachungszentrum SC, vorzugsweise aber auch die Überwachungseinrichtungen SP, SP' durch spezielle Serviceanbieter zur Verfügung gestellt, auf die das Endgerät MS über das Kommunikationssystem WLAN zugreifen kann.

Das Überprüfungszentrum SC in Figur 1 kann auch bestimmen, dass das Endgerät MS selbst seine Funktionsweise überprüft. Zu diesem Zweck überträgt das Überwachungszentrum SC über die Netzzugangsstation AP; BS entsprechende Überprüfungssoftware SW über die Luftschnittstelle zum Endgerät MS. Die Software SW ermöglicht dann die selbsttätige Überprüfung des Endgerätes MS.

Anhand von Figur 2 wird nun die Funktionsweise des in Figur 1 dargestellten Funkkommunikationssystems WLAN; GSM beschrieben. Dabei sind in Figur 2 die einzelnen Verfahrensschritte mit den Ziffern 1 bis 10 durchnummeriert, auf die im Folgenden Bezug genommen wird. Figur 2 zeigt von links nach rechts Verfahrensschritte, die durch die unterschiedlichen Komponenten des Funkkommunikationsnetzes WLAN; GSM aus Figur 1 durchgeführt werden. Von links nach rechts in Figur 2 sind diese Komponenten das Endgerät MS, die Netzzugangsstation AP; BS, eine der Überprüfungseinrichtungen SP sowie das Überprüfungszentrum SC. In einem ersten Schritt wird eine Rekonfiguration des Endgerätes MS eingeleitet. In einem zweiten Schritt wartet das Endgerät MS zunächst eine Zeitspanne t, ob es vom Funkkommunikationssystem WLAN; GSM ein Bestätigungssignal erhält, das anzeigt, dass das Endgerät während seines Betriebes auf korrekte Funktionsweise überprüft werden wird. Ein solches Bestätigungssignal, das in Figur 1 mit S2 bezeichnet ist, wird jedoch nur dann automatisch vom Kommunikationssystem erzeugt, wenn es sich um ein solches mit Systembetreiber, im vorliegenden Fall also um das GSM-Netz GSM handelt. In einem solchem Fall würde der nachfolgend beschriebene dritte Schritt übersprungen und sofort mit dem vierten Schritt fortgefahren. In Figur 2 wurde jedoch unterstellt, dass sich das Endgerät MS zur Zeit im Ad-hoc-Netz WLAN befindet. Da bei diesem ein zentraler Systembetreiber fehlt, erhält das Endgerät MS während der Zeitspanne t kein Bestätigungssignal S2 von der Netzzugangsstation AP; BS des Funkkommunikationssystems. Daher übermittelt das Endgerät MS in einem dritten Schritt nach Ablauf der Zeitspanne t ein Anforderungssignal an das Überprüfungszentrum SC. In Figur 1 is das Anforderungssignal S1 eingezeichnet, dass das Endgerät MS an die Netzzugangsstation AP; BS übermittelt. Von dort gelangt es zum Überwachungszentrum SC, wobei das Endgerät MS eine Adresse ADR des Überwachungszentrums SC verwendet, die zuvor im Endgerät MS gespeichert wurden. In Reaktion auf das Anforderungssignal S1 bestimmt das Überprüfungszentrum SC in einem vierten Schritt, dass die Überprüfungseinrichtung SP die Überprüfung des Endgerätes MS auf korrekte Funktionsweise durchführen soll. Das Überwachungszentrum SC wählt diejenige Überwachungseinrichtung SP aus, die sich am nächsten zur Netzzugangsstation AP; BS bzw. zum Endgerät MS befindet.

In einem fünften Schritt übermittelt die vom Überwachungszentrum SC ausgewählte Überwachungseinrichtung SP ein Bestätigungssignal an die Netzzugangsstation AP; BS, die in einem sechsten Schritt das Bestätigungssignal S2 (vergleiche Figur 1) weiter zum Endgerät MS überträgt. Nach Erhalt des Bestätigungssignals S2 setzt das Endgerät MS seinen Betrieb fort.

Würde das Endgerät MS kein Bestätigungssignal S2 erhalten, wäre das damit gleichzusetzen, dass dem Endgerät keine Zulassung für den Betrieb erteilt worden ist und das Endgerät MS würde sich selbst deaktivieren.

In einem siebten Schritt wird die Luftschnittstelle A zwischen dem Endgerät MS und der Netzzugangsstation AP; BS von der Überwachungseinrichtung SP hinsichtlich korrekter Signale des Endgerätes MS überprüft. Wird anschließend in einem achten Schritt ein Fehlverhalten des Endgerätes MS durch die Überwachungseinrichtung SP detektiert, wird dies in einem neunten Schritt der Netzzugangsstation AP; BS mitgeteilt, woraufhin in einem zehnten Schritt zur Behebung des Fehlers eine Rekonfigurierung des Endgerätes durch ein Software-Download erfolgt. Anschließend können die beschriebenen zehn Schritte erneut durchgeführt werden.

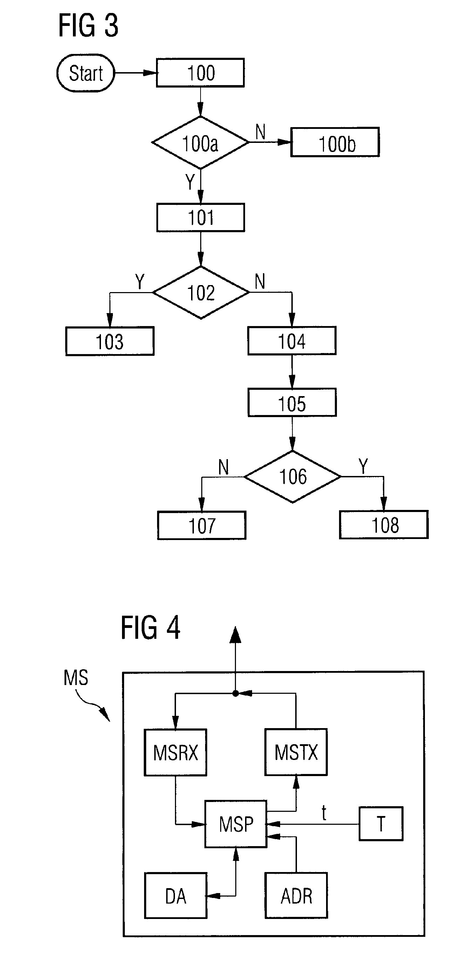

Figur 4 zeigt das Endgerät MS aus Figur 1. Neben einer Sendeeinrichtung MSTX und einer Empfangseinrichtung MSRX zum Senden bzw. Empfangen von Signalen weist das Endgerät MS einen Prozessor MSP zur Steuerung seiner Funktionen auf. Weiterhin weist es einen Zeitgeber T zum Messen der Zeitspanne t gemäß dem zweiten Schritt aus Figur 2 auf. Weiterhin enthält das Endgerät MS einen Speicher, in dem die Adresse ADR der Bestätigungseinheit CU bzw. ihres Überwachungszentrum SC gespeichert ist. Des Weiteren ist eine Deaktivierungseinheit DA vorhanden, die die beschriebene Deaktivierung des Endgerätes MS bewirkt, sofern entweder kein Bestätigungssignal S2 über die Empfangseinrichtung MSRX empfangen wird oder ein spezielles Deaktivierungssignal empfangen wird, was im Falle eines durch die Überprüfung des Betriebes detektierten Fehlers der Funktionsweise des Endgerätes MS der Fall ist.

Die Überwachungseinrichtungen SP, SP` sowie das Überwachungszentrum SC in Figur 1 weisen Empfangseinrichtungen und Sendeeinrichtungen zum Empfangen bzw. Senden der entsprechenden Signale sowie jeweils einen Prozessor auf, der zu ihrer Steuerung dient.

Gemäß Figur 3 wird bei Inbetriebnahme des Endgerätes MS aus Figur 1 zunächst (Block 100) das Verfahren zur Generierung des Bestätigungssignals S2, wie gemäß Figur 2 erläutert, eingeleitet. In Block 100a erfolgt eine Überprüfung, ob das Bestätigungssignal S2 an die Mobilstation MS übermittelt wurde. Ist dies nicht der Fall, deaktiviert sich das Endgerät MS selbsttätig (Block 100b). Ist dies dagegen der Fall, wird die Überprüfung der Funktionsweise des Endgerätes MS während seines Betriebes durchgeführt (Block 101). Im Falle eines aufgetretenen Fehlers wird zunächst überprüft, ob der Fehler behebbar ist (Block 102). Der Grund, warum auch im Falle eines nichtbehebbaren Fehlers nicht sofort eine Deaktivierung des Endgerätes MS erfolgt, liegt darin, dass aufgrund einer möglichen Bewegung des Endgerätes MS im Funkkommunikationssystem zu einem späteren Zeitpunkt (beispielsweise bei Verlassen der aktuellen Zelle eines zellularen Mobilfunksystems und Betreten einer neuen Zelle) sich die Anforderungen an die Fehlerfreiheit des Betriebs des Endgerätes MS ändern können.

Ist der Fehler behebbar, wird der Fehler durch entsprechende Anweisungen der Überwachungseinrichtung SP an das Endgerät MS behoben (Block 103). Dies geschieht durch Versetzen des Endgerätes MS in einen entsprechenden Betriebszustand. Ist der detektierte Fehler dagegen nicht behebbar, wird die bestehende Verbindung des Endgeräts MS, über die die Signale S in Figur 1 übermittelt werden, unterbrochen (Block 104). Anschließend erfolgt ein Vergleich der aktuellen Überprüfungsergebnisse der Überwachungseinrichtung SP mit älteren Messergebnissen, die die Überwachungseinrichtung SP für dasselbe Endgerät MS bereits zuvor ermittelt hat (Block 105). Dabei erfolgt eine Untersuchung, ob derselbe Fehler bereits mehrfach aufgetreten ist und ob in diesem Fall eine zuvor festgelegte Anzahl desselben Fehlers bereits überschritten wurde. Alternativ kann statt des Vergleichs mit bereits zuvor aufgetretenen Fehlern auch die Schwere des Fehlers überprüft werden (Block 106). Die Anzahl der zulässigen Fehler bzw. die Schwere des gerade noch tolerierbaren Fehlers ist abhängig davon, wo sich das Endgerät MS innerhalb des Kommunikationssystem WLAN; GSM gerade befindet. Die aktuelle Position kann beispielsweise über einen entsprechenden Location Service Provider oder durch Nutzen von Informationen des Mobility Managements festgestellt werden. Befindet sich das Endgerät MS beispielsweise in einer privaten Umgebung (Wohnung des Teilnehmers) oder in einer Umgebung mit gewöhnlich geringem Verkehrsaufkommen, können die Anforderungen für die Fehlerfreiheit des Betriebs des Endgerätes MS geringer sein, als in Gegenden mit hohen Anforderungen an die Verlässigkeit des Betriebs bzw. mit hohem Verkehrsaufkommen.

Ergibt diese Abfrage, dass die vorgegebene Anzahl von Fehlern nicht überschritten wurde bzw. die Schwere des Fehlers noch im tolerablen Bereich liegt, bleibt das Endgerät MS für einen weiteren Betrieb zugelassen und wird in einen Stand-by-Modus versetzt (Block 107). Ist dagegen die festgelegte Fehleranzahl überschritten bzw. die Schwere des Fehlers nicht mehr tolerabel, wird das Endgerät MS durch ein entsprechendes Signal der Überwachungseinrichtung SP deaktiviert (Block 108).

Zur Feststellung von Fehlern, die beim Betrieb des Endgeräts MS auftreten, kann die Überwachungseinrichtung SP die vom Endgerät MS ausgesendeten Signale S auf Einhaltung von Protokollen überwachen, die durch den für das jeweilige Kommunikationssystem WLAN; GSM geltenden Standard festgelegt sind.

Das Überwachungszentrum SP aus Figur 1 hat auch die Möglichkeit, statt der Überwachungseinrichtung SP, SP' das Endgerät MS selbst für die Durchführung der Überprüfung auf korrekte Funktionsweise zu bestimmen. Zu diesem Zweck kann das Überwachungszentrum SC über die Netzzugangsstation AP; BS entsprechende Prüfsoftware SW zum Endgerät MS herunterladen. Das Endgerät MS nutzt dann diese Prüfsoftware SW zur Durchführung ihrer eigenen Überprüfung.

Günstigerweise ist die für die Aussendung des Anforderungssignals S1 verwendete Adresse ADR des Überwachungszentrums SC für alle möglichen Kommunikationssysteme, in denen das Endgerät MS betrieben werden kann (beispielsweise nachdem es durch entsprechende Software-Downloads jeweils für derartige Systeme einsatzfähig gemacht worden ist) gültig. Die Adresse ADR kann beispielsweise eine bestimmte und für alle Kommunikationsnetze geltende Telefonnummer sein. Eine solche Adresse ADR wäre dann vergleichbar mit den heute üblichen Notrufnummern, die in den verschiedensten Mobilfunksystemen einheitlich sind. Für Deutschland ist diese Notrufnummer beispielsweise die "112".

Die Erfindung eignet sich zum Einsatz in beliebigen durch Software-Downloads rekonfigurierbaren Endgeräten MS. Sie eignet sich zum Einsatz in beliebigen Funkkommunikationsnetzen, in denen derartige rekonfigurierbaren Endgeräte eingesetzt werden können.

Es ist auch möglich, dass statt nur einer Überwachungseinrichtung SP mehrere Überwachungseinrichtungen SP, SP' sowie unter Umständen auch das Endgerät MS selbst gleichzeitig eine Überwachung der Funktionsweise des Endgerätes MS während seines Betriebs vornehmen. Dies wird ebenfalls durch das Überwachungszentrum SC festgelegt. Dabei kann jede der an einer solchen Überprüfung beteiligten Einheiten bestimmte, ihr von dem Überwachungszentrum SC zugewiesene Parameter bzw. Protokollnachrichten des Endgerätes MS überwachen bzw. überprüfen.

Die Auswahl der die Überprüfung durchführenden Überprüfungseinrichtung SP durch das Überprüfungszentrum SC kann außer unter dem Gesichtspunkt der Minimierung des Datenverkehrs im gesamten Kommunikationsnetz auch unter dem Gesichtspunkt durchgeführt werden, dass die rechenintensiven Überprüfungsmaßnahmen gleichmäßig zwischen den zur Verfügung stehenden Überprüfungseinrichtungen SP, SP' verteilt werden.

## Patentansprüche

1. Verfahren zum Betrieb eines Endgerätes (MS) in einem Funkkommunikationssystem (WLAN), bei dem
das Endgerät nur dann für den Betrieb im Kommunikationssystem zugelassen wird, wenn eine Bestätigung vorliegt, dass das Endgerät während seines Betriebes auf korrekte Funktionsweise überprüft werden wird.

2. Verfahren nach Anspruch 1, bei dem
- ein Bestätigungssignal (5, 6, S2) vorgesehen ist, dass im Falle seiner Übermittlung an das Endgerät (MS) angibt, dass das Endgerät während seines Betriebes überprüft werden wird,
- und das Endgerät für den Betrieb im Kommunikationssystem (WLAN) zugelassen wird, indem das Bestätigungssignal an das Endgerät übermittelt wird.

3. Verfahren nach Anspruch 2, bei dem
- das Endgerät (MS) vor seiner Zulassung zum Betrieb im Kommunikationssystem (WLAN) an eine Bestätigungseinheit (CU) ein Anforderungssignal (3, S1) übermittelt
- und die Bestätigungseinheit aufgrund des Anforderungssignals die Prüfung des Endgerätes veranlasst und das Bestätigungssignal (5, 6, S2) an das Endgerät übermittelt.

4. Verfahren nach Anspruch 3, bei dem
das Endgerät (MS) für die Übermittlung des Anforderungssignals (3, S1) an die Bestätigungseinheit (CU) eine zuvor im Endgerät gespeicherte Adresse (ADR) der Bestätigungseinheit verwendet, die für die Verwendung durch eine Vielzahl von Endgeräten zumindest in diesem Kommunikationssystem (WLAN) vorgegeben ist.

5. Verfahren nach einem der Ansprüche 3 oder 4, bei dem
das Endgerät (MS) das Anforderungssignal (3, S1) erst aussendet, nachdem nach einer von ihm durchgeführten Anmeldung beim Kommunikationsnetz (WLAN) eine vorgegebene Zeitspanne (t) verstrichen ist, in der es das Bestätigungssignal (5, 6, S2) nicht bereits automatisch erhalten hat.

6. Verfahren nach einem der vorstehenden Ansprüche, bei dem
- mehrere Einrichtungen (SP, SP') in der Lage sind, die Überprüfung des Endgeräts auf korrekte Funktionsweise während seines Betriebs durchzuführen,
- und vor der Durchführung der Überprüfung bestimmt wird, welche dieser Einrichtungen (SP, SP`) die Überprüfung des Endgeräts durchführt.

7. Verfahren nach Anspruch 6, bei dem
die Bestimmung der Einrichtung (SP) zur Durchführung der Überprüfung in der Weise erfolgt, dass sich die Einrichtung möglichst in der Nähe des Endgeräts (MS) befindet.

8. Verfahren nach einem der vorstehenden Ansprüche, bei dem
- als Einrichtung zur Durchführung der Überprüfung das Endgerät (MS) selbst bestimmt wird
- und dem Endgerät über eine Luftschnittstelle für die Durchführung der Überprüfung erforderliche Software (SW) zugeführt wird.

9. Verfahren nach einem der vorstehenden Ansprüche, bei dem während der Prüfung des Endgerätes (MS) von diesem zu übertragende Signale (S) auf die Einhaltung zumindest eines bestimmten Qualitätskriteriums überprüft werden, dessen Wert davon abhängig ist, wo sich das Endgerät innerhalb des Funkkommunikationssystems (WLAN) befindet.

10. Verfahren nach einem der vorstehenden Ansprüche, bei dem nach der Zulassung des Endgeräts (MS) zum Betrieb der weitere Betrieb des Endgerätes im Kommunikationssystem (WLAN) nur dann nachträglich verweigert wird, wenn die Prüfung des Endgerätes während seines Betriebs eine bestimmte Anzahl von Fehlern oder einen Fehler, der einen bestimmten Schwellwert überschreitet, ergeben hat.

11. Funkkommunikationssystem (WLAN)
- mit einem Endgerät (MS),
- mit einer Bestätigungseinheit (CU) mit einer Einrichtung (SPU) zum Erzeugen eines Bestätigungssignals (5, 6, S2), dem entnehmbar ist, dass das Endgerät während seines Betriebes auf korrekte Funktionsweise überprüft werden wird, und mit einer Sendeeinrichtung (SPTX) zum Übermitteln des Bestätigungssignals an das Endgerät,
- dessen Endgerät eine Empfangseinrichtung (MSRX) zum Empfang des Bestätigungssignals aufweist,
- und dessen Endgerät eine Deaktivierungseinrichtung (DA) aufweist, die einen weiteren Betrieb des Endgerätes nur zulässt, wenn die Empfangseinrichtung das Bestätigungssignal erhalten hat.

12. Endgerät (MS) für ein Funkkommunikationssystem (WLAN),
- mit einer Empfangseinrichtung (MSRX)_zum Empfang eines Bestätigungssignals (5, 6, S2) von einer Bestätigungseinheit (CU) des Kommunikationssystems, dem entnehmbar ist, dass das Endgerät während seines Betriebes im Kommunikationssystem auf korrekte Funktionsweise überprüft werden wird,
- und mit einer Deaktivierungseinrichtung (DA), die einen weiteren Betrieb des Endgerätes nur zulässt, wenn die Empfangseinrichtung das Bestätigungssignal erhalten hat.

13. Bestätigungseinheit (CU) für ein Funkkommunikationssystem (WLAN)
- mit einer Einrichtung (SP) zum Erzeugen eines Bestätigungssignals (5, 6, S2), dem entnehmbar ist, dass ein Endgerät (MS) während seines Betriebes im Kommunikationssystem auf korrekte Funktionsweise überprüft werden wird,
- und mit einer Sendeeinrichtung zum Übermitteln des Bestätigungssignals an das Endgerät.
